# EUROPEAN PATENT APPLICATION

(11) **EP 4 718 801 A1**
(43) Date of publication of application: **01.04.2026**
(21) Application number: 25204837.6
(22) Date of filing: 26.09.2025
(51) Int. Cl.: H04L 41/0663, H04L 41/40, H04L 47/76

(54) **METHODS FOR PERFORMING A FAILOVER OF A TRAFFIC MANAGEMENT SERVICE AND DEVICES THEREOF**

(30) Priority: 30.09.2024 US 202418901305
(71) Applicant: F5, INC., Seattle, WA 98104 (US)
(72) Inventor: PISHARODY, Vinod, San Jose, 95119 (US); FREEMAN, Arthur William James, Kirkland, 98034 (US)
(74) Representative: Savi, Massimiliano

(57) **Abstract**

Methods, network traffic manager apparatuses, non-transitory computer readable media, and systems that perform a failover of a traffic management service are disclosed. The method allocates unconstrained resources to a standby instance. An active instance can be configured to process network traffic. The unconstrained resources can be available without constraint to the active instance. The method responds to a detected failure of the active instance by allocating a constrained resource to the standby instance and switching the standby instance from an inactivate status to an active status to enable the standby instance to process the traffic using the constrained resource.

## Description

### FIELD

This disclosure relates to perform a failover of a traffic management service, in particular, to perform a failover of a traffic management service for processing traffic in a containerized network.

### BACKGROUND

As the development of various wired and wireless technologies, communication technologies are propelling the world towards a progressively interconnected and networked society. The swift expansion of mobile communications and technological advancements have render greater demand for enhanced network service capacity and connectivity. However, failures of network components happen from time to time due to various reasons, such as overload, memory leaks, latency, security threats, slow response in the network or the like. Therefore, a mechanism to process a failover of a traffic management service in a faster and efficient way is always desired.

### SUMMARY

This disclosure is directed to methods and devices related to performing a failover of a traffic management service. More specifically, the methods and devices relate to perform a failover of a traffic management service with an inactive standby instance. Relevant non-transitory computer readable medium and network traffic management system are also disclosed.

According to an aspect of the disclosure, a method for performing a failover of a traffic management service is disclosed. The method may be implemented by a network traffic management system, wherein the network traffic management system may comprise one or more network traffic management apparatuses, client devices, or network server devices. The method may comprise allocating unconstrained resources to a standby instance. An active instance can be configured to process network traffic. The unconstrained resources can be available without constraint to the active instance. The method can respond to a detected failure of the active instance by allocating a constrained resource to the standby instance and switching the standby instance from an inactivate status to an active status to enable the standby instance to process the traffic using the constrained resource.

According to another aspect of the disclosure, an apparatus for performing a failover of a traffic management service is disclosed. The apparatus may comprise memory comprising programmed instructions stored in the memory and one or more processors configured to be capable of executing the programmed instructions stored in the memory to: allocate unconstrained resources to a standby instance. An active instance can be configured to process network traffic. The unconstrained resources can be available without constraint to the active instance. The executable code may further cause the one or more processors to respond to a detected failure of the active instance by allocating a constrained resource to the standby instance and switching the standby instance from an inactivate status to an active status to enable the standby instance to process the traffic using the constrained resource.

According to another aspect of the disclosure, a non-transitory computer readable medium is disclosed. The non-transitory computer readable medium may have stored thereon instructions for performing a failover of a traffic management service, comprising executable code which when executed by one or more processors, causes the one or more processors to allocate unconstrained resources to a standby instance. An active instance can be configured to process network traffic. The unconstrained resources can be available without constraint to the active instance. The executable code may further cause the one or more processors to respond to a detected failure of the active instance by allocating a constrained resource to the standby instance and switching the standby instance from an inactivate status to an active status to enable the standby instance to process the traffic using the constrained resource.

According to another aspect of the disclosure, a network traffic management system comprising one or more traffic management apparatuses, server devices, or client devices is disclosed. The network traffic management system may comprise memory comprising programmed instructions stored thereon and one or more processors configured to be capable of executing the stored programmed instructions to: allocate unconstrained resources to a standby instance. An active instance can be configured to process network traffic. The unconstrained resources can be available without constraint to the active instance. The executable code may further cause the one or more processors to respond to a detected failure of the active instance by allocating a constrained resource to the standby instance and switching the standby instance from an inactivate status to an active status to enable the standby instance to process the traffic using the constrained resource.

With implementations of the above and operations that will be discussed below, a fast failover with little downtime of switching a standby instance to an active instance may be achieved. Moreover, limited resources may be saved rather than being allocated to a standby instance before such a switch.

The above and other aspects and their implementations are described in greater detail in the drawings, the descriptions, and the claims below.

### BRIEF DESCRIPTION OF THE DRAWINGS

The foregoing and other aspects of the present disclosure are best understood from the following detailed description when read in connection with the accompanying drawings. For the purpose of illustrating this technology, specific examples are shown in the drawings, it being understood, however, that the examples of this technology are not limited to the specific instrumentalities disclosed. Included in the drawings are the following Figures:
FIG. 1 illustrates an exemplary network traffic management system;
FIG. 2 illustrates an exemplary execution environment of a network traffic management apparatus;
FIGS. 3 illustrates an exemplary block diagram of a network traffic management apparatus;
FIG. 4 illustrates a flow diagram of an exemplary method for performing a failover of a traffic management service being executed at a network traffic management apparatus;
FIG. 5 illustrates an exemplary application environment of a network traffic management apparatus;
FIG. 6 illustrates another exemplary application environment of a network traffic management apparatus; and
FIG. 7 illustrates a further exemplary application environment of a network traffic management apparatus.

### DETAILED DESCRIPTION

The present disclosure may be understood more readily by reference to the following detailed description of exemplary examples. Before the exemplary implementations and examples of the methods, devices, and systems according to the present disclosure are disclosed and described, it is to be understood that implementations are not limited to those described within this disclosure. Numerous modifications and variations therein will be apparent to those skilled in the art and remain within the scope of the disclosure. It is also to be understood that the terminology used herein is for describing specific implementations only and is not intended to be limiting. Some implementations of the disclosed technology will be described more fully hereinafter with reference to the accompanying drawings. This disclosed technology may, however, be embodied in many different forms and should not be construed as limited to the implementations set forth therein.

In the following description, numerous specific details are set forth. But it is to be understood that examples of the disclosed technology may be practiced without these specific details. In other instances, well-known components, structures, and techniques have not been shown in detail in order not to obscure an understanding of this description. References to "an implementation," "an example," "some examples," etc., indicate that the implementation(s) of the disclosed technology so described may include a particular feature, structure, or characteristic, but not every implementation necessarily includes the particular feature, structure, or characteristic. Further, repeated use of the phrase "in some examples" does not necessarily refer to the same implementation, although it may. Additionally, it is to be understood that particular features, structures, or characteristics that described in different examples, implementations or the like, may be further combined in various ways and being implemented in one or more implementations.

A network traffic management system may relate to a set of tools, processes, devices, and relevant technologies to control and optimize data flow within a computer network. Such network traffic management system may monitor, analyze, control and balance network traffic to maintain the performance and reliability of a computer network. A network traffic management system may be implemented in various network topologies. Devices utilized and topologies designed in a network environment may depend on specific requirements and a scale of a network. Factors may include such as the size of the network, its geographic spread, the types of applications and services being offered, the organization's traffic management requirements, etc. For example, the network traffic management system may be implemented in a centralized, distributed, or cloud-based topology in various networks. The network traffic management system may be executed in various networks, include but not limited to, Local Area Networks (LAN), Wide Area Networks (WAN), Metropolitan Area Network (MAN), data center networks, cloud networks, hybrid networks, or any appropriate existing networks or the ones that may be developed in the future. Various devices may be involved in the network traffic management system, depending on the specific network and topology being used. For example, edge routers or switches, firewalls, proxies, load balancers, Content Delivery Network (CDN) servers, application servers, etc. may be included in a network traffic management system.

A traffic management service may refer to a software or program, a segment of a software or program, or a series of software or program, that being designed to process internet traffic for specific task(s) in a system or network (e.g., process specific task for an application of a network service device such as web application, non-web application, the network traffic management system, a network controller, network component, or another application, or process any managing tasks for traffic of application(s)). Internet traffic refers to the flow of data across the internet, encompassing all the data sent and received by users and devices, and is crucial for performing specific tasks within a network. A traffic management service may be executed within a network component, a network device, network controller, or any physical or virtual network element in a system. Such application may have one or more than one functions (is also called features).

A network traffic management apparatus may refer to an apparatus executing one or more operations as will be described below to protect a network service device according to various examples of this disclosure. The network traffic management apparatus may allocate resources to a standby instance, detect a failure of an active instance, and perform a failover of a traffic management service by implementing the one or more operations described in this disclosure. Such network traffic management apparatus may reside at a same or different place as the traffic management service, at any physical or virtual, single or a cluster of network component or module, network device, appliance, element, or reside in any other device that communicatively connected thereto which is appropriate to implement the operation(s) in this disclosure. By way of example, the network traffic management apparatus may be executed on load balancing device, security device, etc.

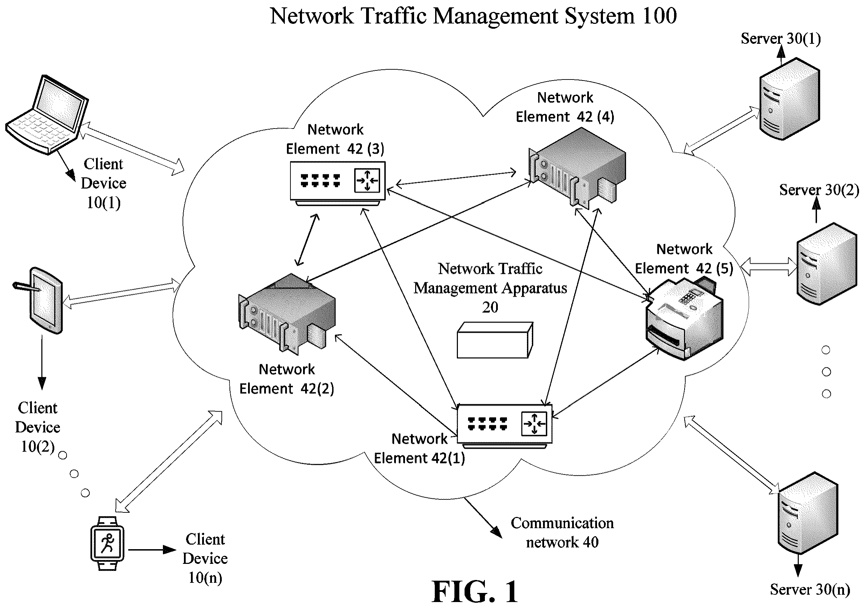

FIG. 1 illustrates an exemplary simplified network traffic management system 100 according to an example of this disclosure. As illustrated in FIG. 1, the network traffic management system 100 may comprise a plurality of client devices 10(1)-10(n), a communication network 40, and a plurality of servers 30(1)-30(n) serving the client devices 10(1)-10(n). The client devices 10 and servers 30 may communicatively connected with each other via the communication network 40.

Referring to FIG. 1, as an exemplary implementation of the user device discussed above, the client device 10 may send a request to the server 30 for a service (e.g., via a web browser installed at the client device 10). The client device 10 may also be referred to as a "client," "user equipment," or "user equipment device," which may include but is not limited to a mobile phone, smartphone, tablet, laptop computer, a smart electronics, a wearable device, a video surveillance device, an industrial wireless sensors, or an appliance including an air conditioner, a television, a refrigerator, an oven and the like, or other devices that are capable of communicating wirelessly over a network. Moreover, the client device 10 may also be a proxy or a server or any network elements or devices, which may send above discussed request to the server 30 on behalf of a user equipment. For example, the client device 10 may be a proxy *(e.g.,* a forward proxy) of a private network, which forwards a request message that it received from a client device isolated within the private network. In this way, the proxy sends a request message on behalf of the isolated device and allows it to be served by server 30. In this scenario, the proxy plays the role of client device 10 in the network traffic management system 100 as illustrated in FIG. 1.

Continuing to refer to FIG. 1, as an exemplary implementation of the network service device discussed above, the server 30 may respond to the client device 10 and have one or more interactions with the client device 10 to provide the requested service or data, in response to receiving the client device 10's request via the communication network 40. The servers 30(1)-(n) may be any types of servers to serve a client device. For example, the servers 30(1)-(n) may be application servers that run applications, manage, and execute various tasks related to the processing of user device's requests within the network environment. Various services may be provided by the server 30.

As illustrated in FIG. 1, the communication network 40 may comprise a plurality of network elements 42(1)-42(n) to provide connectivity and data transmission. Depending on the topology and features of the communication network 40, there may be various types of network elements 42(1)-42(n) *(e.g.,* a router, a proxy, a load balancer, etc.) to perform designated functionalities. As illustrated in FIG. 1, a client device 10 may be communicatively connected to the communication network 40. When a client device 10 sends a message to request a service provided by a server 30, the message may go through some of the network elements 42(1)-42(n) before reaching its destination. It's to be understood that different network technologies may be applied by the communication network 40. For example, communication network 40 may be one or more wired or wireless public or private networks, based on any industry-standard protocols, such as Ethernet, Wi-Fi, Satellite Networks, 4G/LTE (Long-Term Evolution), 5G, and various internet protocols like TCP/IP. The communication network 40 may also be formed by connecting appropriate number of networks together as needed. During processing of traffic in the communication network 40, as illustrated in FIG. 1, the network traffic management apparatus 20 may reside on any of the network elements 42(1)-42(n) as needed or appropriate.

In the network environment illustrated in FIG. 1, an instance of a service pod running in the communication network 40 may fail due to various reasons. Multiple active instances may run in the network environment to process traffic. This means traffic can be distributed among multiple active instances. A problem with such mechanism is, when a systematic problem happens (e.g., memory leaks), the systematic problem may impact all those active instances resulting in failures of the active instances in a quick succession-potentially leading to downtime which is not desired. Downtime may have critical impact on applications having a high requirement for performance and every second of disruption may be extremely crucial (e.g., downtime for 911 calls). One solution allows for the creation of an active standby instance that waits to take up traffic as soon as configured resources from an active instance are made available. All resources can be allocated from the active instance to the standby instance when the active instance fails. Then, the standby instance may take over the traffic that was supposed to be processed by the failed active instance. However, the problem for this solution is, fully provisioning the active standby instance requires additional resources which are in limited supply. Therefore, there is a waste of resources in such a solution.

Referring to FIG. 1, by implementing the network traffic management apparatus 20 described in this disclosure on any network component or device within the communication network 40 *(e.g.,* reside at the network element 42), a failover of a traffic management service may be performed as discussed in this disclosure. Such network traffic management 20 may be executed to implement one or more operations which will be discussed below.

It is to be understood that FIG. 1 illustrates an exemplary simplified network traffic management system 100 to which many variations may be made. For example, other types and numbers of systems, devices, components, and elements in other topologies may be used to add into the illustrated system or replace any part of the illustrated system. Furthermore, one or more of the components depicted in the network traffic management system 100, such as the network traffic management apparatus 20, may be configured to operate as virtual instances on the same or different physical machine(s). In some scenarios, the network traffic management apparatus 20 may operate as more than one separate devices at different physical devices, and communicatively connected with each other through communication network 40 or other relevant network(s) as needed, rather than operate on the same physical device as illustrated in FIG. 1.

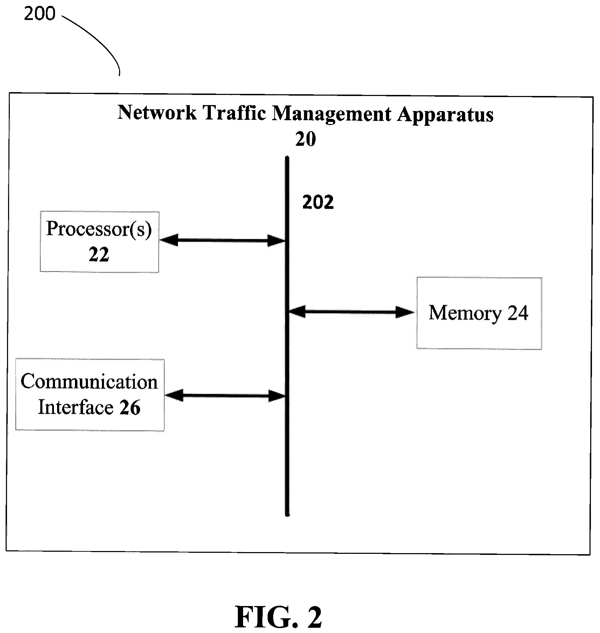

FIG. 2 shows an exemplary execution environment 200 of the network traffic management apparatus 20. In the execution environment 200, the network traffic management apparatus 20 may include processor(s) 22, a memory 24, a communication interface 26 and/or other circuitries, which are coupled together by a bus 202 or other communication link. It is to be understood that the network traffic management apparatus 20 may include other types and/or numbers of elements in other configurations. The processor(s) 22 of the network traffic management apparatus 20 may execute programmed instructions stored in the memory 24 of the network traffic management apparatus 20 for any number of the operations or tasks identified in this disclosure. The processor(s) 22 of the network traffic management apparatus 20 may include one or more central processing units (CPU) or general-purpose processors with one or more processing cores, for example, although other types of processor(s) can also be used. The communication interfaces 26, which may support wireless, e.g., Bluetooth, Wi-Fi, WLAN, cellular (4G, LTE/A, 5G), and/or wired, Ethernet, Gigabit Ethernet, optical networking protocols. The communication interfaces 26 may also include serial interfaces, such as universal serial bus (USB), serial ATA, IEEE 1394, lighting port, I2C, slimBus, or other serial interfaces. In some examples, the execution environment 200 may further include power functions and various input interfaces (not shown in FIG. 2). In some examples, the execution environment 200 may further include a user interface that may include human-to-machine interface devices and/or graphical user interfaces (GUI).

The memory 24 of the network traffic management apparatus 20 may store these programmed non-transitory computer-readable instructions for one or more aspects of the technology as described and illustrated herein, although some or all of the programmed instructions could be stored elsewhere. A variety of different types of memory storage devices, such as random access memory (RAM), read only memory (ROM), Hard Disk Drive (HDD), solid state drives, flash memory, Erasable Programmable Read Only Memory (EPROM), or other computer readable medium such as magnetic or optical disc (e.g., Compact Disc Read Only Memory (CD-ROM)) which is read from and written to by a magnetic, optical, or other machine-readable medium that is coupled to the processor(s) 22, may be used as the memory 24. Accordingly, the memory 24 of the network traffic management apparatus 20 may store application(s) that can include computer executable instructions that, when executed by the network traffic management apparatus 20, cause the network traffic management apparatus 20 to perform actions or operations, such as to transmit, receive, or otherwise process messages, for example, and to perform other actions or operations described and illustrated below with reference to the drawings. An application may be implemented as a unit, module, component, instance, or engine of other applications and/or operating system extensions, plugins, or the like. The application(s) can be executed within or as virtual machine(s) or virtual server(s) that may be managed in a cloud-based computing environment, without being tied to one or more specific physical network devices.

The methods, devices, processing, circuitry, and logic described below may be implemented in many different ways and in many different combinations of hardware, software, firmware, or combination thereof. For example, all or parts of the implementations may be circuitry that includes an instruction processor, such as a Central Processing Unit (CPU), microcontroller, or a microprocessor; or as an Application Specific Integrated Circuit (ASIC), Programmable Logic Device (PLD), or Field Programmable Gate Array (FPGA); or as circuitry that includes discrete logic or other circuit components, including analog circuit components, digital circuit components or both; or any combination thereof. The circuitry may include discrete interconnected hardware components or may be combined on a single integrated circuit die, distributed among multiple integrated circuit dies, or implemented in a Multiple Chip Module (MCM) of multiple integrated circuit dies in a common package, as examples.

Accordingly, the circuitry may store or access instructions for execution, or may implement its functionality in hardware alone. The instructions may be stored in a tangible storage medium (e.g., memory 24) that is other than a transitory signal. A product, such as a computer program product, may include a storage medium and instructions stored in or on the medium, and the instructions when executed by the circuitry in a device may cause the device to implement any of the processing described above or illustrated in the drawings.

The implementations discussed herein may be distributed. For instance, the circuitry may include multiple distinct system components, such as multiple processors and memories, and may span multiple distributed processing systems. Parameters, databases, and other data structures may be separately stored and managed, may be incorporated into a single memory or database, may be logically and physically organized in many different ways, and may be implemented in many different ways. Example implementations include linked lists, program variables, hash tables, arrays, records (e.g., database records), objects, and implicit storage mechanisms. Instructions may form parts (e.g., subroutines or other code sections) of a single program, may form multiple separate programs, may be distributed across multiple memories and processors, and may be implemented in many different ways. Example implementations include stand-alone programs, and as part of a library, such as a shared library like a Dynamic Link Library (DLL). The library, for example, may contain shared data and one or more shared programs that include instructions that perform any of the processing described above or illustrated in the drawings, when executed by the circuitry.

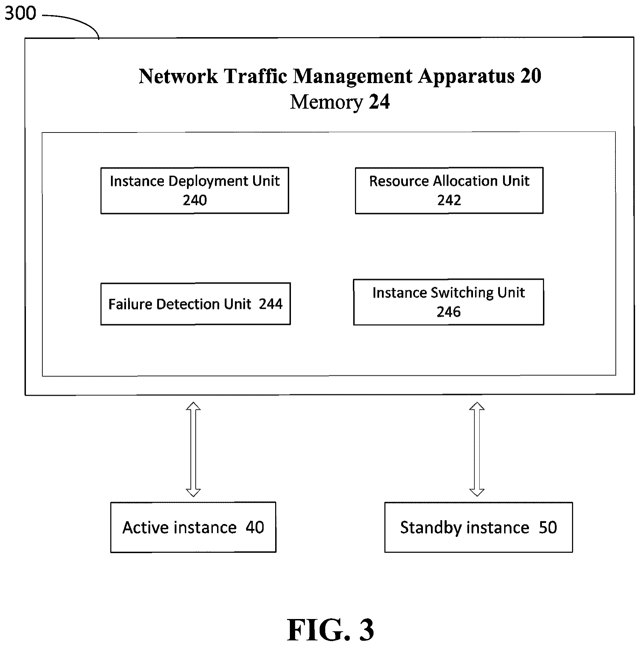

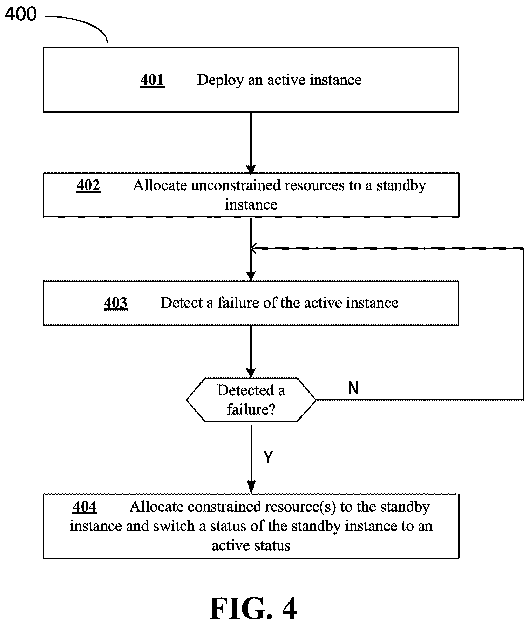

Referring to FIG. 3, an exemplary block diagram of the network traffic management apparatus 20 configured to perform a failover of a traffic management service is illustrated. In FIG. 3, the network traffic management apparatus 20 may comprise an Active Instance Deployment Unit 240, a Resource Allocating Unit 242, a Failure Detecting Unit 244, and a Standby Instance Switching Unit 246. Operations performed by those units will be described in conjunction with the flow diagram illustrated in FIG. 4. Those units described herein may be implemented with various available or appropriate programing APIs, such as JavaScript, Python, etc. In some examples, one unit can be programmed to perform the operations of all the above units or combinations thereof.

The term "unit" (and other similar terms such as module, submodule, etc.) may refer to computing software, firmware, hardware, and/or various combinations thereof. At a minimum, however, units are not to be interpreted as software that is not implemented on hardware, firmware, or recorded on a non-transitory processor readable recordable storage medium. Indeed, "unit" is to be interpreted to include at least some physical, non-transitory hardware such as a part of a processor, circuitry, or computer. Two different units may share the same physical hardware *(e.g.,* two different units can use the same processor and network interface). The units described herein can be combined, integrated, separated, and/or duplicated to support various applications. Also, a function described herein as being performed at a particular unit can be performed at one or more other units and/or by one or more other devices instead of or in addition to the function performed at the particular unit. Further, the units can be implemented across multiple devices and/or other components local or remote to one another. Additionally, the units can be moved from one device and added to another device, and/or can be included in both devices. The units can be implemented in software stored in memory or non-transitory computer-readable medium. The software stored in the memory or medium can run on a processor or circuitry (e.g., ASIC, PLA, DSP, FPGA, or any other integrated circuit) capable of executing computer instructions or computer code. The units can also be implemented in hardware using processors or circuitry on the same or different integrated circuit.

FIG. 4 illustrates a flow diagram of an exemplary process 400 for performing a failover of a traffic management service implemented or executed by the network traffic management apparatus 20. As discussed above, the network traffic management apparatus 20 may be implemented in any appropriate system having a communicative connection with a network element 42 as illustrated in FIG. 1. In the following, steps illustrated in FIG. 4 will be described in conjunction with the logic of the network traffic management apparatus 20 shown in FIG. 3.

At step 401, an Instance Deployment Unit 240 of the network traffic management apparatus 20 may deploy an active instance 40 with constrained and unconstrained resources. Herein, the active instance 40 is in an active status and processes traffic in the system or network, while a standby instance 50 is in an inactive status.

At step 402, the Resource Allocating Unit 242 of the network traffic management apparatus 20 may allocate unconstrained resources to the standby instance 50. In other words, the standby instance 50 is allocated with partial resources and thereby is partially configured. In order for the standby instance 50 to become active and have an active status, the standby instance 50 must wait for the availability and allocation of constrained resources. Herein, the constrained resources are resources that the standby instance 50 needs to fully act as an active instance 40 to process traffic, therefore the standby instance 50 will not become active until the constrained resources become available and until the constrained resources are allocated to the standby instance 50. This means system resource(s) which are more limited or constrained may be used or allocated to active instances within the system, which may improve resource utilization.

However, allocating partial resources (i.e., the unconstrained resources) to the standby instance 50 allows certain configuration steps of the standby instance 50 to be performed in advance, before there is an actual need for the standby instance 50 to process any traffic. For example, the configurations steps or operations can be performed in advance can be, such as creating a container, configuring the container with allocated hardware and deploying the container (e.g., running related code to load program(s) into the code, starting the code, etc.) in a Kubernetes based system. Accordingly, with partial resources (i.e., the unconstrained resources) being allocated to a standby instance 50, the time it may take to switch the status of the standby instance 50 to an active status may be reduced. Therefore, it is to be understood that allocating resource(s) to the standby instance 50 before the failure of an active instance 40 may allow for enabling configuration(s) of the standby instance 50 in advance.

It is to be understood that resources in a system or network is finite and therefore valuable. Some of the resources may be unconstrained or readily available, such as a computing resource (e.g., graphics processing unit (GPU), a Central Processing Unit (CPU)), a storage resource (e.g., memory), network bandwidth, etc. But some of the resources may be more limited depending on the character of the system or network, for example, IP addresses, virtual functions, certain types of memory or certain types of objects and structures of memory, etc. within the system or network. Therefore, the resources which are expandable and readily available may be considered as unconstrained resources and can be allocated to the standby instance 50 without restraint, while the resources which are more limited may be considered constrained resources and may be allocated to the standby instance 50 when needed or available, which will be described below. There are system overhead considerations because the unconstrained resources can be allocated to a standby instance 50 before it has an active status. Therefore, determining the appropriate amount of unconstrained resources to allocate among the active and standby instances involves balancing performance optimization with resource usage optimization (e.g., memory and hardware resources).

In some examples, the unconstrained resources may represent a resource in the system or network that can be shared among different instances for different kinds of traffic. In other words, such unconstrained resources can be not specifically used for a particular service. In some examples, the unconstrained resources may refer to a resource that can be shared among different instances. This unconstrained shared resource may be needed for an instance to process traffic in the system or network. With such an unconstrained shared resource being allocated to a standby instance 50, a switch to an active status may be ensured after allocation of the rest of the constrained resources needed by the standby instance. For example, when an active instance 40 fails, a resource claimed by the active instance 40 may be released, which may then be allocated to other network components or instances right after the release. In one example, where a system does not pre-allocate unconstrained resources to standby instances, when the system tries to allocate the previously claimed resource from the failed active instance 40 to another instance, the other instance may need additional resources apart from the newly allocated resources from the failed active instance 40 to become active. Therefore, the other instance may not be able to take over the traffic previously being processed by the failed active instance 40. Therefore, allocating the unconstrained resource before a failure of an active instance may be considered as reserving such resources in advance for the standby instance 50, which may guarantee its switch to an active instance 40 when needed *(e.g.,* by reserving the type and amount resources that an instance requires).

At step 403, the Failure Detecting Unit 244 of the network traffic management apparatus 20 may detect a failure of the active instance 40. In a non-limiting example, a failure in a Kubernetes based system may due to a crash, or slow responding and terminated by the system.

At step 404, in response to the failure being detected, the Resource Allocating Unit 242 of the network traffic management apparatus 20 may allocate part of the resources (i.e., constrained resource(s)) from the failed active instance 40 to the standby instance 50. The Instance Switching Unit 246 of the network traffic management apparatus 20 may switch a status of the standby instance 50 from an inactivate status to an active status. With the constrained resources being allocated, the standby instance 50 may be enabled to process traffic. As compared to the unconstrained resources discussed above, in some examples, the constrained resource(s) may represent resource(s) used specifically for processing the related traffic. In other words, such constrained resources may not be shared among different instances or service pods, or at least not shared among all the instances in the system or network (e.g., share among several different instances). In some examples, the constrained resource may comprise network address resource, computing resource, storage resource associated with the traffic, or any combination thereof.

In some examples, the constrained resource may be specific to the instance and therefore be shared between the active instance 40 and the standby instance 50. Accordingly, such constrained resource when released by the failed active instance 40 may be reclaimed by the network traffic management apparatus 20 (e.g., the Resource Allocating Unit 242). Then the reclaimed constrained resource may be allocated to the standby instance 50. For example, a certain type of memory may be need to process a task in network traffic. As a non-limiting example, the system may not have enough memory for both an active instance 40 and its standby instance 50 for a certain task. In this example, whatever the system has may be allocated to a standby instance 50 first, such as (instead of reserving 100% of the required memory) 80% of the memory can be allocated to the standby instance 50 as an unconstrained resource. Then when the active instance 40 fails, 20% of the required memory may be reclaimed from the active instance 40 and allocated to the standby instance 50 as a constrained resource. With obtaining the 20% memory, the standby instance 50 may be able to switch to an active status to process traffic.

In another example, the second type of resource may be instructions associated with processing traffic, such as what type of traffic to intercept or process, where to further forward the traffic, etc. It is to be understood that the reclaimed constrained resource may not necessarily to be allocated to the standby instance 50 if it is not necessary for the standby instance 50 to have an active status (e.g., different from the example mentioned above, there are sufficient constrained resources remaining in the system to allocate to the standby instance 50). Then the reclaimed constrained resource may be allocated to other instance(s) of the system as needed.

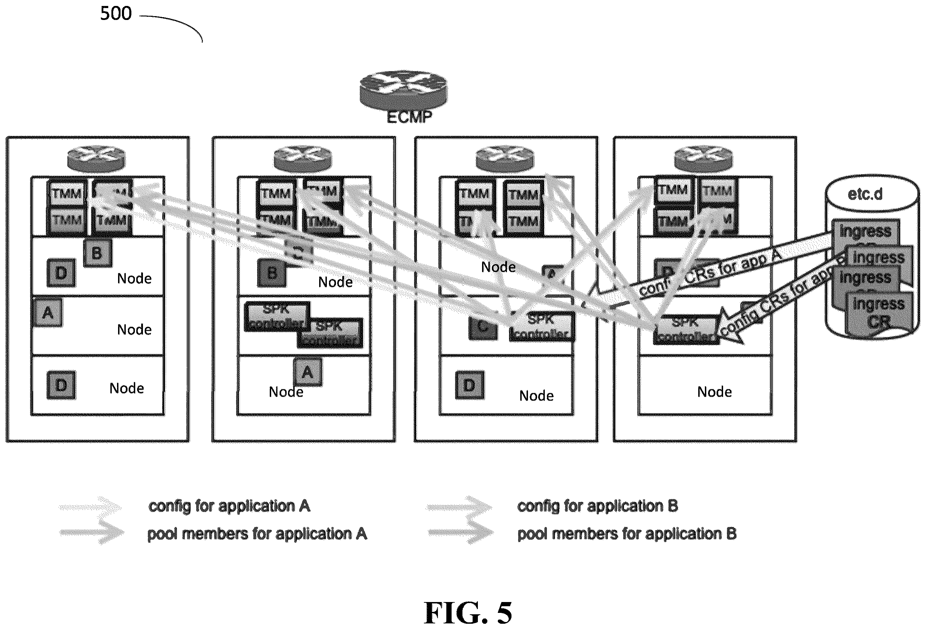

In some examples, the operations discussed in this disclosure are implemented in a containerized network. As a non-limiting example, a Kubernetes based network is one of such containerized networks. FIGs. 5-7 illustrate exemplary application environments of a network traffic management apparatus in Kubernetes based networks respectively. In Kubernetes based networks, there may be a control plane for each cluster comprising a series of servers, and instances of various applications (e.g., applications of a web server, non-web applications, etc.) and controller(s) may run at working nodes on pod level within a cluster. The controller may mange the resource(s) shared within a cluster. An instance may be executed and run within a pod, and a standby instance discussed herein may be executed as a replica which may be considered as a clone of a pod.

As illustrated in FIG. 5, pods of applications A, B, C, D may run a plurality of nodes. The pods may also comprise a Kubernetes controller and run as a pod in the same collection of servers in the same Kubernetes cluster. Herein, each Kubernetes controller may perform load balancing operations to pods of a respective application A, B, C, D. Specifically, a Kubernetes controller may configure one or more traffic management micro kernel (TMM) pods to execute load balancing for an application pod. Traffic may enter into system 500 from outside via an Equal Cost Multi-Path (ECMP). The traffic may be directed by the Kubernetes controller to a respective TMM. Then the relevant TMM may perform load balancing operations and direct the traffic to an instance of the designated application. In the system, the network traffic management apparatus 20 may be executed on the Kubernetes controller, or a device or component communicatively connected to the Kubernetes controller. Then take a TMM as an example of the traffic management service discussed in this disclosure. In such scenario, if the TMM fails, the network traffic management apparatus 20 may cause the Kubernetes controller to allocate the second type of resource to a replica and switch the replica to an active TMM to perform the load balance for the traffic to an application pod.

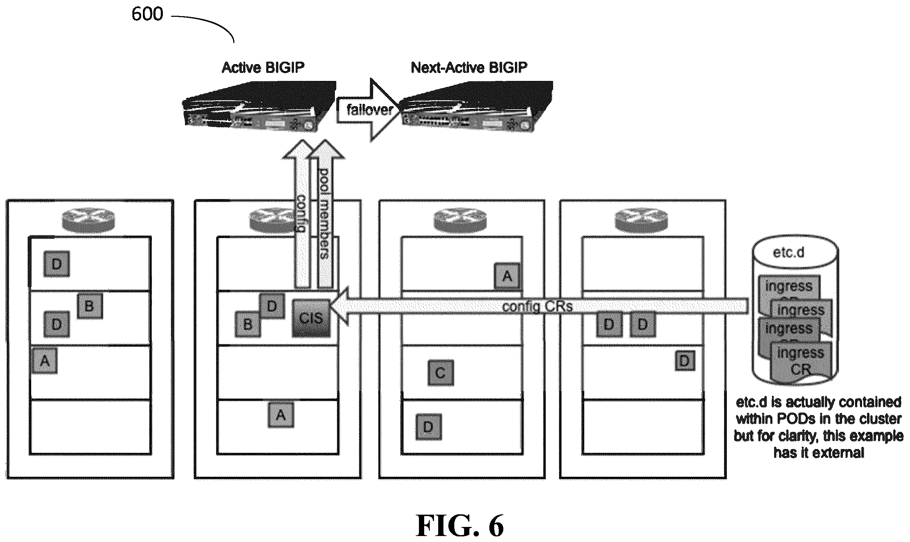

In the system 600 as illustrated in FIG. 6, the network traffic management apparatus 20 may be implemented at Container Ingress Services (CIS) or a device or component communicatively connected to CIS, wherein CIS acts as a controller of a cluster. In this case, the BIGIP is an example of the traffic management service discussed in this disclosure, whose standby instance may be created and switched in the manner described herein by the network traffic management apparatus 20.

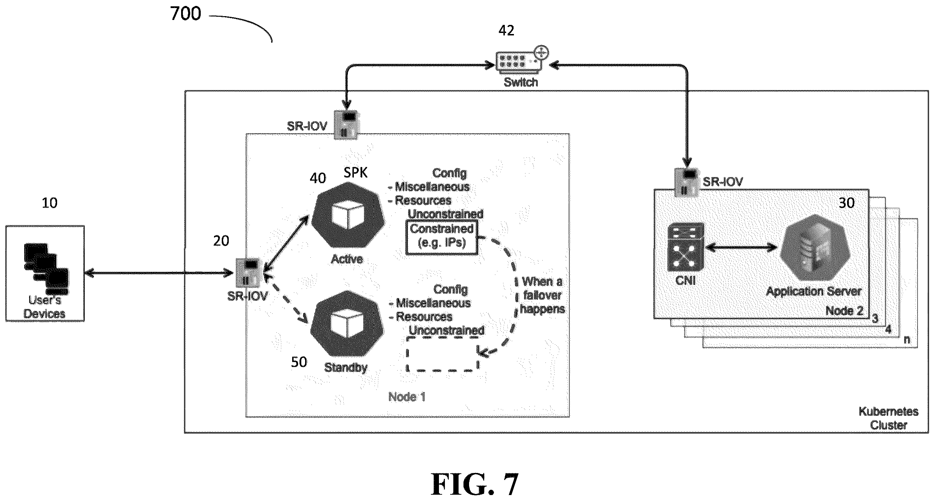

In the system illustrated in FIG. 7, SPK is an example of the traffic management service discussed herein, which is a load balancer instance as described above. In FIG. 7, traffic from a client device 10 may enter the cluster through a single root I/O virtualization (SR-IOV) interface. In a case wherein an instance of SPK fails, the network traffic management apparatus 20 may perform failover for SPK and have its standby instance become an active instance 40 to perform load balancing for a plurality of applications of application servers 30. It's to be understood that the network traffic management apparatus 20 may be implemented at any appropriate place to create a standby instance for a various traffic management service, such as a service proxy pod of Kubernetes based networks.

With implementations of all or part of the above discussed operations for performing a failover of a traffic management service, the apparatus may perform a failover of a traffic management service faster, with reduced downtime of a failed active instance. By allocating a first type of resource to a standby instance, certain configuration steps or operations may be performed in advance, before a failure is detected. Accordingly, when a failure is detected and there is a need to switch the standby instance from an inactivate status to an active status, those steps having been performed in advance allow for a faster failover. Moreover, as discussed above, with the first type of resource being allocated in advance, a potential risk of no resource to perform the failover may be avoided. Also, in response to a failure being detected, allocating a second type of resource to the standby instance and switching the standby instance to an active status to process traffic may be completed in a short time period, which could be determinative. Furthermore, by only allocating the second type of resource to a standby instance in response to a failure being detected, the constraint and limited second type of resource may be used only for active instances. Therefore, system resource usage may also be optimized to a certain extent.

Throughout the specification and claims, terms may have nuanced meanings suggested or implied in context beyond an explicitly stated meaning. It will be further understood that: the term "or" may be inclusive or exclusive unless expressly stated otherwise; the term "set" may comprise zero, one, or two or more elements; the terms "some", "another," and "particular" are used as naming conventions to distinguish elements from each other and does not imply an ordering, timing, or any characteristic of the referenced items unless otherwise specified; the terms "such as", "e.g.," "for example", and the like describe one or more examples but are not limited to the described examples(s); the term "comprises" and/or "comprising" specify the presence of stated features, but do not preclude the presence or addition of one or more other features.

Reference throughout this specification to features, advantages, or similar language does not imply that all of the features and advantages that may be realized with the present solution should be or are included in any single implementation thereof. Rather, language referring to the features and advantages is understood to mean that a specific feature, advantage, or characteristic described in connection with an example is included in at least one example of the present solution. Thus, discussions of the features and advantages, and similar language, throughout the specification may, but do not necessarily, refer to the same example.

Furthermore, the described features, advantages and characteristics of the present solution may be combined in any suitable manner in one or more implementations or examples. One of ordinary skill in the relevant art will recognize, in light of the description herein, that the present solution can be practiced without one or more of the specific features or advantages of a particular implementation or example. In other instances, additional features and advantages may be recognized in certain implementations or examples that may not be present in all implementations of the present disclosure.

## Claims

1. A method for performing a failover of a traffic management service, the method implemented by a management component in a containerized network environment having a network traffic manager, client, or server, the method comprising:
allocating unconstrained resources to a standby instance, wherein an active instance processes network traffic, wherein the unconstrained resources are necessary for processing network traffic, and wherein the unconstrained resources are available without constraint to the active instance; and
responding to a detected failure of the active instance by:
allocating a constrained resource to the standby instance, and
switching the standby instance from an inactivate status to an active status to enable the standby instance to process network traffic using the constrained resource.

2. The method of claim 1, wherein the allocating the constrained resource to the standby instance comprises:
reclaiming the constrained resource from the active instance; and
allocating the constrained resource to the standby instance.

3. The method of claim 1, wherein the unconstrained resources are available to active and standby instances without limit in availability, and constrained resources are limited in availability for use among the active and standby instances.

4. The method of claim 1, wherein the unconstrained resources comprise at least one of a computing resource or a storage resource, and the unconstrained resource comprises at least one of a network address resource, a computing resource or a storage resource associated with the network traffic.

5. The method of claim 1, wherein the containerized network is a Kubernetes based network.

6. An apparatus for performing a failover of a traffic management service, comprising memory comprising programmed instructions stored in the memory and one or more processors configured to be capable of executing the programmed instructions stored in the memory to:
allocate unconstrained resources to a standby instance, wherein an active instance processes network traffic, wherein the unconstrained resources are necessary for processing network traffic, and wherein the unconstrained resources are available without constraint to the active instance; and
respond to a detected failure of the active instance by:
allocating a constrained resource to the standby instance, and
switching the standby instance from an inactivate status to an active status to enable the standby instance to process network traffic using the constrained resource.

7. The apparatus of claim 6, wherein the allocating the constrained resource to the standby instance comprises:
reclaim the constrained resource from the active instance; and
allocate the constrained resource to the standby instance.

8. The apparatus of claim 6, wherein the unconstrained resources are available to active and standby instances without limit in availability, and constrained resources are limited in availability for use among the active and standby instances.

9. The apparatus of claim 6, wherein the unconstrained resources comprise at least one of a computing resource or a storage resource, and the unconstrained resource comprises at least one of a network address resource, a computing resource or a storage resource associated with the network traffic.

10. The apparatus of claim 6, wherein the containerized network is a Kubernetes based network.

11. A non-transitory computer readable medium having stored thereon instructions for performing a failover of a traffic management service, comprising executable code which when executed by one or more processors, causes the one or more processors to carry out the steps of the method according to any one of claims 1 - 5.

12. A network traffic management system, comprising one or more traffic management apparatuses, network server devices, or client devices, the network traffic management system comprising memory comprising programmed instructions stored thereon and one or more processors configured to be capable of executing the stored programmed instructions to carry out the steps of the method according to any one of claims 1 - 5.
